# EUROPÄISCHE PATENTSCHRIFT

(11) **EP 2 630 018 B1**
(45) Veröffentlichungstag und Bekanntmachung des Hinweises auf die Patenterteilung: **09.09.2015**
(21) Anmeldenummer: 11773719.7
(22) Anmeldetag: 20.10.2011
(51) Int. Cl.: B60T 8/48, B60T 8/36, F15B 1/04, F16L 55/04

(54) **HYDRAULIKAGGREGAT**
HYDRAULIC UNIT
GROUPE HYDRAULIQUE

(30) Priorität: 21.10.2010 DE 102010042747
(43) Veröffentlichungstag der Anmeldung: 28.08.2013
(73) Patentinhaber: Continental Teves AG & Co. oHG, 60488 Frankfurt (DE)
(72) Erfinder: DINKEL, Dieter, 65824 Schwalbach (DE); KLEY, Ronald, 63500 Seligenstadt (DE); SONNENSCHEIN, Georg, 65779 Kelkheim (DE)
(86) Internationale Anmeldenummer: PCT/EP2011/068285
(87) Internationale Veröffentlichungsnummer: WO 2012/052488

(56) Entgegenhaltungen:
- WO-A1-91/08130
- WO-A1-2004/101308
- WO-A1-2004/113141
- WO-A1-2007/141092
- DE-A1- 19 709 779

## Beschreibung

Die Erfindung betrifft ein Hydraulikaggregat für eine Kraftfahrzeugbremsanlage nach dem Oberbegriff des Patentanspruchs 1.

Ein Hydraulikaggregat für eine Kraftfahrzeugbremsanlage ist aus EP 0 950 004 B1 bekannt. Das Hydraulikaggregat weist stromabwärts zu den Auslassventilen einen Pumpensaugpfad auf, an den ein Niederdruckspeicher angeschlossen ist, dem ein federbeaufschlagtes Rückschlagventil nachgeordnet ist, über das der Pumpensaugpfad an einer Pumpe angeschlossen ist. Weiterhin ist der Pumpensaugpfad mittels eines in Grundstellung geschlossenen Umschaltventils normalerweise von einem zu einem Bremsdruckgeber führenden Druckmittelanschluss getrennt, wobei die Federschließkraft am Rückschlagventil groß genug bemessen sein muss, um ein Einströmen von Druckmittel des Bremsdruckgebers in den Niederdruckspeicher sicher zu verhindern, sobald das Umschaltventil geöffnet ist.

In einem für die Bevorratung des Druckmittels im Niederdruckspeicher vorgesehenen Speicherraum ist ein translatorisch bewegter Kolben flüssigkeitsdicht aufgenommen, wobei zur Sicherstellung der Selbstentleerung des Niederdruckspeichers die Betätigungskraft einer Kolbenfeder hinreichend groß bemessen sein muss, um außer der Kolbenreibung auch die relativ große Schließkraft der dem Niederdruckspeicher nachgeordneten Rückschlagventilfeder überwinden zu können. Während der Bremsschlüpfregelung verhindert das entsprechend stark befederte Rückschlagventil bei nur geringen erforderlichen Bremsdrücken die Bildung von Unterdruck während des Pumpenlaufs in den Radbremsen.

Die relativ große Vorspannkraft der steifen Kolbenfeder führt zu dem Nachteil, dass während der Bremsschlupfregelung zur Volumenaufnahme des Niederdruckspeichers zwangsläufig eine hohe hydraulische Betätigungskraft erforderlich ist, die wiederum den schnellen Druckabbau in den Radbremsen beeinträchtigt. Das entsprechend stark befederte Rückschlagventil stellt wie bereits erwähnt ein weiteres Hindernis dar.

Ferner geht aus der WO 2004/101308 A1 ein Bremssystem sowie ein Verfahren zur Regelung eines Kraftfahrzeugbremssystems hervor, wobei sich die Gesamtverzögerung des Bremssystems aus Verzögerungsanteilen einer hydraulischen Reibbremse und Verzögerungsanteilen einer elektrisch-regenerativen Bremse zusammensetzt, wozu beim Bremsen mit der elektrisch-regenerativen Bremse Bremsflüssigkeit in einen Niederdruckspeicher abgeleitet wird.

Aus der WO 2007/141092 A1 ist bereits ein Hydraulikaggregat für eine Kraftfahrzeugbremsanlage der gattungsbildenden Art bekannt, die nach dem Rückförderprinzip arbeitet, mit als Ein- und Auslassventilen ausgeführten Druckregelventilen in einem zumindest teilweise im Hydraulikaggregat vorhandenen Bremskreis, der mit wenigstens einem Paar Radbremsen und einem Bremsdruckgeber verbunden ist, mit einer im Hydraulikaggregat stromabwärts an den Auslassventilen angeschlossenen Rücklaufleitung, die über einen ersten hydraulischen Anschluss in eine von einem Kolben begrenzte Druckmittelkammer eines Niederdruckspeichers einmündet und die über einen zweiten hydraulischen Anschluss an der Druckmittelkammer sowohl mit der Saugseite einer Pumpe als auch über ein in Grundstellung geschlossenes Umschaltventil mit einer zum Bremsdruckgeber führenden Leitung verbindbar ist, sowie mit einem in Richtung der Druckmittelkammer sperrenden Rückschlagventil, das im Bereich des zweiten Anschlusses in die Rücklaufleitung eingesetzt ist, wobei zwischen dem Kolben und dem zweiten Anschluss ein elastisches Dichtelement vorgesehen ist, das in der Grundstellung des Kolbens die zwischen dem zweiten Anschluss und der Druckmittelkammer vorgesehene hydraulische Verbindung trennt.

Es ist die Aufgabe der Erfindung, im Hydraulikaggregat der angegebenen Art die Ausführung und Anordnung des Rückschlagventils und des elastischen Dichtelements mit möglichst geringem konstruktivem Aufwand zu verbessern.

Es ist das Ziel der Erfindung, einen möglichst schnellen Druckabbau in den Radbremsen zu ermöglichen, um sowohl während einer konventionellen Bremsdruckregelung ein Blockieren der Räder unter allen Umständen zu verhindern, als auch bei einer Rekuperationsbremsung, in der die Auslassventile des Rekuperationsbremskreises geöffnet sind, den vom Fahrer erzeugte Bremsdruck vorrangig in den Niederdruckspeicher des Rekuperationsbremskreises und nicht zu den angeschlossenen Radbremsen gelangen zu lassen.

Eine weitere Aufgabe der Erfindung wird darin gesehen, die Entstehung von Unterdruck in den Radbremsen zu verhindern, wenn die Auslassventile geöffnet sind und die Pumpe aktiviert ist, ohne auf die Verwendung einer steifen Rückschlagventilfeder zurückgreifen zu müssen.

Diese Aufgaben werden erfindungsgemäß für ein Hydraulikaggregat der genannten Art durch die kennzeichnenden Merkmale des Patentanspruchs 1 gelöst.

Weitere Merkmale der Erfindung sind den einzelnen Patentansprüchen als auch aus der Beschreibung eines Ausführungsbeispiels anhand zweier Zeichnungen zu entnehmen.

Es zeigen:
- Figur 1: einen Hydraulikschaltplan für eine Bremsanlage mit einer schematisch dargestellten Schließfunktion eines beweglich im Niederdruckspeicher angeordneten Kolbens,
- Figur 2: einen Längsschnitt durch eine zweckmäßige konstruktive Ausführung des in Figur 1 schematisch gezeigten Niederdruckspeichers.

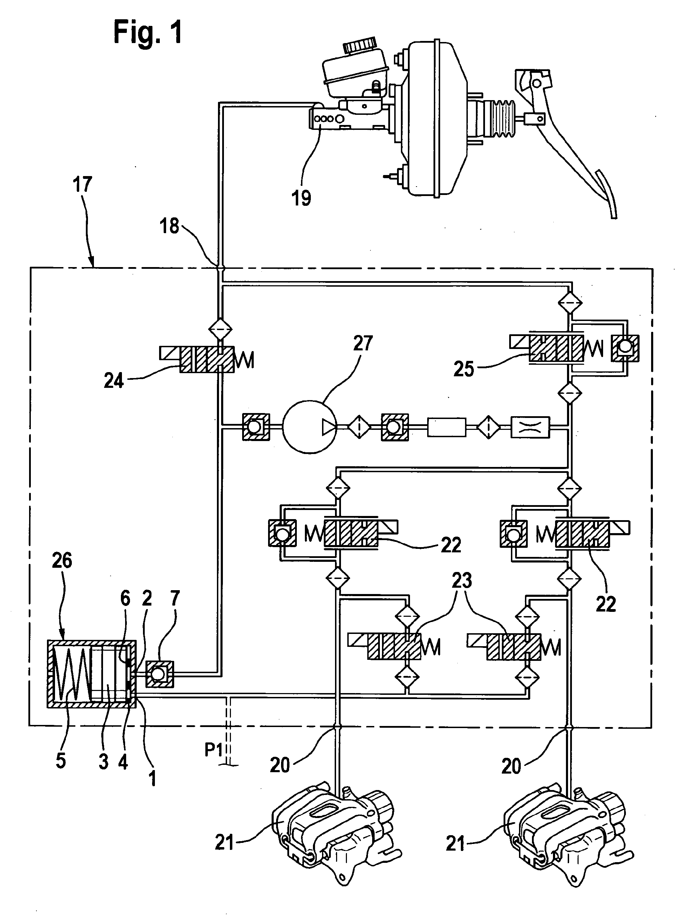

Die Fig. 1 zeigt in prinzipieller Darstellung den schaltungstechnischen Aufbau innerhalb eines Hydraulikaggregates 17 für eine Kraftfahrzeugbremsanlage, die nach dem Rückförderprinzip arbeitet. Gezeigt ist ein Bremskreis einer als Zweikreisbremsanlage ausgeführten Schaltungsanordnung. Ein Hauptzylinderanschluss 18 der Zweikreisbremsanlage verbindet das Hydraulikaggregat 17 mit einem Bremsdruckgeber 19, wobei der Hauptzylinderanschluss 18 innerhalb des Hydraulikaggregates 17 über mehrere in einem Bremskreis angeordnete Druckregelventile mit den Radbremsanschlüssen 20 verbunden ist, an dem ein Paar Radbremsen 21 angeschlossen sind. Jeder Radbremse 21 sind zur Druckregelung innerhalb des Hydraulikaggregates 17 ein Einlass- und Auslassventil 22, 23 zugeordnet, wobei stromabwärts zu jedem Auslassventil 23 eine Rücklaufleitung angeschlossen ist, die über einen ersten Anschluss 1 in die Druckmittelkammer 4 eines Niederdruckspeichers 26 einmündet. Die Rücklaufleitung ist über einen zweiten Anschluss 2 und ein stromabwärts zur Druckmittelkammer 4 im zweiten Anschluss 2 angeordnetes Rückschlagventil 7 einerseits mit einer Pumpe 27 verbindbar, andererseits aber außerhalb eines autonomen Bremseneingriffs über ein in Grundstellung geschlossenes Umschaltventil 24 vom Bremsdruckgeber 19 getrennt.

Gemäß der gezeigten Ventilgrundstellung der elektromagnetisch betätigbaren Druckregelventile sind die beiden Einlassventile 22 als auch ein zwischen dem Hauptzylinderanschluss 18 und stromaufwärts zu den Einlassventilen 22 in der Bremsleitung angeordnetes Trennventil 25 in der Grundstellung stromlos geöffnet. Das stromaufwärts zum Pumpendruckanschluss in der Bremsleitung eingesetzte Trennventil 25 ermöglicht somit in Verbindung mit den Ein- und Auslassventilen 22, 23 über die eigentliche Blockierschutzregelfunktion hinaus im Zusammenwirken mit dem elektrisch betätigbaren Umschaltventil 24 für jedem Bremskreis eine Antriebsschlupfregelung als auch einen autonomen Bremsenbetrieb, beispielsweise zum Zwecke einer Fahrdynamikregelung.

Wie eingangs bereits erwähnt, mündet die stromabwärts an den Auslassventilen 23 angeschlossenen Rücklaufleitung über einen ersten hydraulischen Anschluss 1 in die von einem Kolben 3 begrenzte Druckmittelkammer 4 des Niederdruckspeichers 26 ein, wobei die Druckmittelkammer 4 über den zweiten hydraulischen Anschluss 2 sowohl mit der Saugseite der Pumpe 27 als auch über das in Grundstellung geschlossenes Umschaltventil 24 mit dem zum Bremsdruckgeber 19 führenden Hauptzylinderanschluss 18 verbindbar ist, mit dem weiteren Merkmal, dass ein in Richtung der Druckmittelkammer 4 sperrendes Rückschlagventil 7 im Bereich des zweiten Anschlusses in die Rücklaufleitung eingesetzt ist.

Um nunmehr die Entstehung von Unterdruck in den Radbremsen 21 zu verhindern, wenn die Auslassventile 23 geöffnet sind und die Pumpe 27 im Rahmen der Bremsschlupfregelung aktiviert ist, sieht die Erfindung vor, dass in der Grundstellung des Kolbens 3 die hydraulische Verbindung zwischen der Druckmittelkammer 4 und dem zweiten Anschluss 2 getrennt ist, während davon unbeeinträchtigt die Druckmittelkammer 4 mit dem ersten Anschluss 1 hydraulisch verbunden bleibt, sodass jederzeit Druckmittel aus den Radbremsen 21 in die Druckmittelkammer 4 abgeführt werden kann. In der abgebildeten Grundstellung des Kolbens 3 ist somit der Niederdruckspeicher zunächst leer, bzw. der Volumeninhalt der Druckmittelkammer 4 beschränkt sich auf ein Minimum. Im leeren Zustand der Druckmittelkammer 4 ist der Kolben 3 infolge der Wirkung der Kolbenfeder 5 in seiner den zweiten Anschluss 2 verschließenden Grundstellung positioniert, sodass der Kolben 3 auf einfache Weise die Trennung zwischen der Druckmittelkammer 4 und dem zweiten Anschluss 2 übernimmt. Die Pumpe 27 kann folglich bei geöffnetem Auslassventil 23 kein Druckmittel aus der Radbremse 21 ansaugen. Erst wenn aus den Radbremsen 21 hinreichend Druckmittel abgelassen wird, beginnt der über den ersten Anschluss 1 initiierte Füllvorgang der Druckmittelkammer 4, sodass erst mit der hydraulischen Überwindung der durch die Kolbenfeder 5 und die Kolbenreibung verursachten Kräfte der zweite Anschluss 2 vom Kolben 3 freigegeben wird. Folglich entfernt sich der Kolben 3 erst mit genügendem Füllgrad der Druckmittelkammer 4 vom zweiten Anschluss 2. Das in den zweiten Anschluss 2 eingesetzte Rückschlagventil 7 kann anschließend nahezu widerstandsfrei in Richtung der Pumpe 27 überströmt werden, da prinzipiell infolge der Trennwirkung des Kolbens 3 die Anordnung einer Rückschlagventilfeder nicht mehr zwingend erforderlich ist.

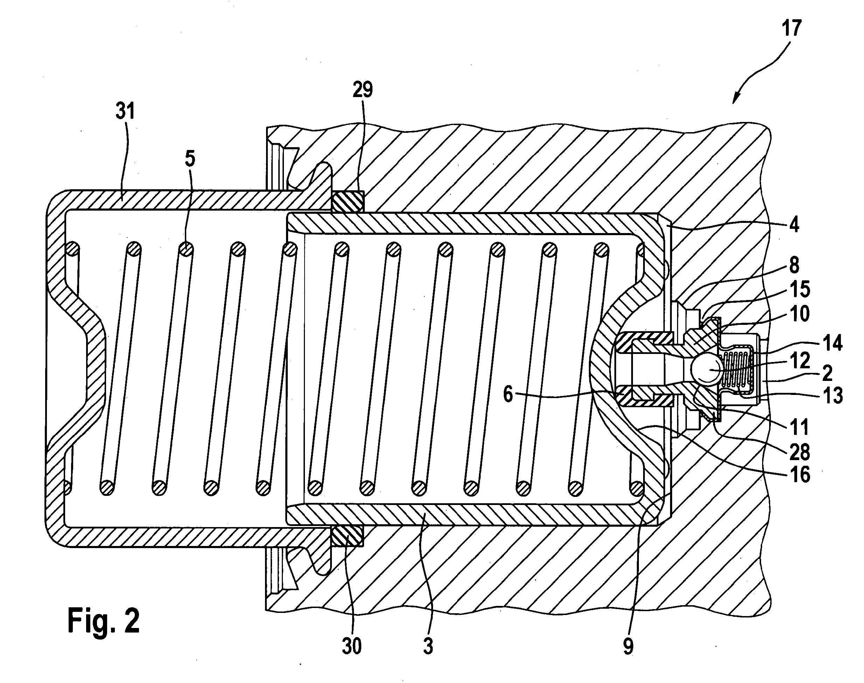

Wie aus der Figur 2 hervor geht, ist zwischen dem Kolben 3 und dem zweiten Anschluss 2 ein elastisches Dichtelement 6 vorgesehen, das in der Grundstellung des Kolbens 3 eine absolut flüssigkeitsdichte Trennung der zwischen dem zweiten Anschluss 2 und der Druckmittelkammer 4 konstruktiv vorgesehenen hydraulischen Verbindung gewährleistet. Besonders kompakt bauend ist das Dichtelement 6 mit dem in Richtung des Niederdruckspeichers 26 sperrenden Rückschlagventil 7 zu einer eigenständig handhabbaren Ventilbaugruppe zusammengefasst, die kraftschlüssig in einer Stufenbohrung 8 einer die Druckmittelkammer 4 begrenzenden Gehäusestirnwand 9 des Niederdruckspeichers 26 befestigt ist, in welche der zweite Anschluss 2 einmündet. Zur zweckmäßigen Ausbildung des Rückschlagventils 7 weist die Ventilbaugruppe ein im Wesentlichen rohrförmiges Ventilgehäuse 10 auf, an dessen dem zweiten Anschluss 2 zugewandter, trichterförmig erweiterter Endabschnitt eine in einem kegelförmigen Ventilsitz 11 aufgenommene Ventilkugel 12 vorgesehen ist, während an dem vom zweiten Anschluss 2 abgewandten Endabschnitt des rohrförmigen Ventilgehäuses 10 das elastische Dichtelement 6 fixiert ist, das kraft- und/oder formschlüssig, vorzugsweise durch Vulkanisation einer Gummidichtung am rohrförmigen Gehäuse 10 gehalten ist. In vorliegendem Ausführungsbeispiel ist die Ventilkugel 12 zusätzlich mittels einer besonders weichen Feder 13 auf dem Ventilsitz 11 präzise positioniert, sodass geringe hydraulische Kräfte in der Druckmittelkammer 4 genügen, um die Ventilkugel 12 weitgehend widerstandsarm von ihrem Ventilsitz 11 abzuheben. Die Feder 13 stützt sich mit ihrer von der Ventilkugel 12 abgewandten Seite in einem Käfig 14 ab, der an einem Kragen 28 des rohrförmigen Gehäuses 10 mittels einer Verbördelung 15 fixiert ist. Das Ventilgehäuse 10 ist gleichzeitig entlang dem Kragen 28 in der Stufenbohrung 8 des Niederdruckspeichers 26 fixiert, wozu von außen in die Druckmittelkammer 4 ein Verstemmstempel eingeführt wird, der die Stufenbohrung 8 im Bereich eines Absatzes zu einer Nase plastisch verformt, die sich über die Verbördelung 15 hinaus auf eine Schrägschulter des trichterförmig erweiterten Kragens 28 erstreckt. Der Kolben 3 wird somit erst in die Druckmittelkammer 4 eingefügt, wenn die Ventilbaugruppe in der Stufenbohrung 8 eingesetzt und verstemmt ist. Danach folgt das Einsetzen der Kolbenfeder 5 sowie ein den Kolben 3 in der Druckmittelkammer 4 abdichtender O-Ring 30, der in eine Stufe 29 der Druckmittelkammer 4 eingelegt und von einem Bund eines Verschlussdeckels 31 überdeckt ist, welcher gleichfalls mittels einer Verstemmung an der Stirnseite des Hydraulikaggregats im Niederdruckspeicher 26 fixiert ist.

Wie aus Figur 2 erkennbar ist, erstreckt sich das rohrförmige Ventilgehäuse 10 mit dem Dichtelement 6 bis zu einer im Boden des Kolbens 3 vorgesehene schalenförmige Vertiefung 16, an der das Dichtelement 6 zur Trennung des zweiten Anschlusses 2 von der Druckmittelkammer 4 in der abgebildeten Grundstellung des Kolbens 3 flüssigkeitsdicht anliegt. In Verbindung mit der schalenförmigen Vertiefung 16 ist die Kontur des Kolbens 3 ebenso wie die Kontur des Verschlussdeckels 31 durch Tiefziehen von Dünnblech hergestellt, sodass sich insgesamt ein kompakter Aufbau mit einer hohen Integrationsdichte, besonders für die Kolbenfeder 5, den Kolben 3 und die Ventilbaugruppe im Niederdruckspeicher 26 ergibt.

### Bezugszeichenliste

- 1: Anschluss
- 2: Anschluss
- 3: Kolben
- 4: Druckmittelkammer
- 5: Kolbenfeder
- 6: Dichtelement
- 7: Rückschlagventil
- 8: Stufenbohrung
- 9: Gehäusestirnwand
- 10: Ventilgehäuse
- 11: Ventilsitz
- 12: Ventilkugel
- 13: Feder
- 14: Käfig
- 15: Verbördelung
- 16: Vertiefung
- 17: Hydraulikaggregat
- 18: Hauptzylinderanschluss
- 19: Bremsdruckgeber
- 20: Radbremsanschlüsse
- 21: Radbremse
- 22: Einlassventil
- 23: Auslassventil
- 24: Umschaltventil
- 25: Trennventil
- 26: Niederdruckspeicher
- 27: Pumpe
- 28: Kragen
- 29: Stufe
- 30: O-Ring
- 31: Verschlussdeckel

## Patentansprüche

1. Hydraulikaggregat (17) für eine Kraftfahrzeugbremsanlage, die nach dem Rückförderprinzip arbeitet, mit einem Hauptzylinderanschluss (18) am Hydraulikaggregat (17) für einen Bremsdruckgeber (19), mit als Ein- und Auslassventilen (22, 23) ausgeführten Druckregelventilen in einem zumindest teilweise im Hydraulikaggregat (17) vorhandenen Bremskreis, der über Radbremsanschlüsse (20) am Hydraulikaggregat (17) mit wenigstens einem Paar Radbremsen (21) verbindbar ist, mit einer im Hydraulikaggregat (17) stromabwärts an den Auslassventilen (23) angeschlossenen Rücklaufleitung, die über einen ersten hydraulischen Anschluss (1) in eine von einem Kolben (3) begrenzte Druckmittelkammer (4) eines Niederdruckspeichers (26) einmündet und die über einen zweiten hydraulischen Anschluss (2) an der Druckmittelkammer (4) sowohl mit der Saugseite einer Pumpe (27) als auch über ein in Grundstellung geschlossenes Umschaltventil (24) mit dem zum Bremsdruckgeber (19) führenden Hauptzylinderanschluss (18) verbindbar ist, sowie mit einem in Richtung der Druckmittelkammer (4) sperrenden Rückschlagventil (7), das im Bereich des zweiten Anschlusses (2) in die Rücklaufleitung eingesetzt ist, wobei in der Grundstellung des Kolbens (3) die hydraulische Verbindung zwischen der Druckmittelkammer (4) und dem zweiten Anschluss (2) getrennt ist, wozu zwischen dem Kolben (3) und dem zweiten Anschluss (2) ein Dichtelement (6) vorgesehen ist, das in der Grundstellung des Kolbens (3) die zwischen dem zweiten Anschluss (2) und der Druckmittelkammer (4) funktionell vorgesehenen hydraulischen Verbindung trennt, **dadurch gekennzeichnet, dass** das Dichtelement (6) elastisch ausgeführt ist und mit dem in Richtung der Druckmittelkammer (4) sperrenden Rückschlagventil (7) zu einer eigenständig handhabbaren Ventilbaugruppe in einer Stufenbohrung (8) einer die Druckmittelkammer (4) begrenzenden Stirnwand (9) des Niederdruckspeichers (26) zusammengefasst ist.

2. Hydraulikaggregat nach Anspruch 1, **dadurch gekennzeichnet, dass** in der Grundstellung des Kolbens (3) die Druckmittelkammer (4) mit dem ersten Anschluss (1) hydraulisch verbunden ist.

3. Hydraulikaggregat nach Anspruch 1 oder 2, **dadurch gekennzeichnet, dass** in der Grundstellung des Kolbens (3), in welcher die Druckmittelkammer (4) mit dem ersten Anschluss (1) hydraulisch verbunden ist, jedoch die Druckmittelkammer (4) durch den Kolben (3) vom zweiten Anschluss (2) hydraulisch getrennt ist, der Volumeninhalt der Druckmittelkammer (4) ein Minimum ist.

4. Hydraulikaggregat nach Anspruch 3, **dadurch gekennzeichnet, dass** in der Grundstellung des Kolbens (3) die Druckmittelkammer (4) entleert ist.

5. Hydraulikaggregat nach Anspruch 4, **dadurch gekennzeichnet, dass** im entleerten Zustand der Druckmittelkammer (4) der Kolben (3) infolge der Wirkung einer Kolbenfeder (5) in seiner den zweiten Anschluss (2) verschließenden Grundstellung positioniert ist.

6. Hydraulikaggregat nach Anspruch 5, **dadurch gekennzeichnet, dass** zu Beginn eines über den ersten Anschluss (1) initiierten Füllvorgangs der Druckmittelkammer (4) der zweite Anschluss (2) vom Kolben (3) freigegeben ist, wozu der Kolben (3) entgegen der Wirkung der Kolbenfeder (5) infolge eines Kolbenhubs vom zweiten Anschluss (2) entfernt ist.

7. Hydraulikaggregat nach Anspruch 1, **dadurch gekennzeichnet, dass** die Ventilbaugruppe kraftschlüssig in der Stufenbohrung (8) der die Druckmittelkammer (4) begrenzenden Stirnwand (9) befestigt ist, in die der zweite Anschluss (2) einmündet.

8. Hydraulikaggregat nach Anspruch 1, **dadurch gekennzeichnet, dass** die Ventilbaugruppe ein im Wesentlichen rohrförmiges Ventilgehäuses (10) aufweist, an dessen dem zweiten Anschluss (2) zugewandter Endabschnitt zur Ausbildung des Rückschlagventils (7) eine in einem kegelförmigen Ventilsitz (11) aufgenommene Ventilkugel (12) vorgesehen ist, und dass an dem vom zweiten Anschluss (2) abgewandten Endabschnitt des rohrförmigen Ventilgehäuses (10) das elastische Dichtelement (6) fixiert ist.

9. Hydraulikaggregat nach Anspruch 8, **dadurch gekennzeichnet, dass** das elastische Dichtelement (6) kraft- und/oder formschlüssig, vorzugsweise durch Vulkanisation einer Gummidichtung, am rohrförmigen Ventilgehäuse (10) gehalten ist.

10. Hydraulikaggregat nach Anspruch 8, **dadurch gekennzeichnet, dass** die Ventilkugel (12) mittels einer
weichen Feder (13) in Richtung des Ventilsitzes (11) beaufschlagt ist, wozu sich die Feder (13) in einem Käfig (14) abstützt, der mittels einer Verbördelung (15) entlang einem Kragen (28) des rohrförmigen Ventilgehäuses (10) fixiert ist.

11. Hydraulikaggregat nach Anspruch 8, **dadurch gekennzeichnet, dass** sich das rohrförmige Ventilgehäuse (10) mit dem Dichtelement (6) in eine im Boden des Kolbens (3) vorgesehene schalenförmige Vertiefung (16) erstreckt, an der das Dichtelement (6) zur Trennung des zweiten Anschlusses (2) von der Druckmittelkammer (4) flüssigkeitsdicht anlegbar ist.

12. Hydraulikaggregat nach Anspruch 11, **dadurch gekennzeichnet, dass** die Kontur des Kolbens (3) in Verbindung mit der schalenförmigen Vertiefung (16) durch Tiefziehen von Dünnblech hergestellt ist.

## Claims

1. A hydraulic unit (17) for a motor vehicle brake system which operates on the return principle, comprising a master cylinder connection (18) on the hydraulic unit (17) for a brake pressure sensor (19), pressure regulating valves in the form of inlet and outlet valves (22, 23) in a brake circuit which is at least partially present in the hydraulic unit (17) and is connectable via wheel brake connections (20) on the hydraulic unit (17) to at least one pair of wheel brakes (21), a return line which is connected downstream of the outlet valves (23) in the hydraulic unit (17) and opens via a first hydraulic connection (1) into a pressure medium chamber (4) of a low-pressure accumulator (26) delimited by a piston (3), and is connectable via a second hydraulic connection (2) to the pressure medium chamber (4) and to the suction side of a pump (27) and also, via a reversing valve (24) which is closed in the rest position, to the master cylinder connection (18) leading to the brake pressure sensor (19), and a non-return valve (7) which blocks in the direction of the pressure medium chamber (4) and is inserted in the return line in the region of the second connection (2), wherein the hydraulic connection between the pressure medium chamber (4) and the second connection (2) is disconnected in the rest position of the piston (3), for which purpose a sealing element (6) is provided between the piston (3) and the second connection (2), which sealing element (6) disconnects the hydraulic connection functionally provided between the second connection (2) and the pressure medium chamber (4) in the rest position of the piston (3), **characterized in that** the sealing element (6) is of elastic design and is combined with the non-return valve (7), which blocks in the direction of the pressure medium chamber (4), to form a valve assembly which can be handled independently in a stepped bore (8) of an end wall (9) of the low-pressure accumulator (26), which end wall (9) delimits the pressure medium chamber (4).

2. Hydraulic unit according to Claim 1, **characterized in that,** in the rest position of the piston (3), the pressure medium chamber (4) is connected hydraulically to the first connection (1).

3. Hydraulic unit according to Claim 1 or 2, **characterized in that,** in the rest position of the piston (3) in which the pressure medium chamber (4) is connected hydraulically to the first connection (1) while, however, the pressure medium chamber (4) is hydraulically isolated from the second connection (2) by the piston (3), the volume content of the pressure medium chamber (4) is at a minimum.

4. Hydraulic unit according to Claim 3, **characterized in that,** in the rest position of the piston (3), the pressure medium chamber (4) is emptied.

5. Hydraulic unit according to Claim 4, **characterized in that,** in the emptied state of the pressure medium chamber (4), as a result of the effect of a piston spring (5) the piston (3) is located in its rest position closing the second connection (2).

6. Hydraulic unit according to Claim 5, **characterized in that,** at the start of a filling process of the pressure medium chamber (4) initiated via the first connection (1), the second connection (2) is opened by the piston (3), for which purpose the piston (3) is moved away from the second connection (2) against the effect of the piston spring (5) as a result of a piston stroke.

7. Hydraulic unit according to Claim 1, **characterized in that** the valve assembly is fastened non-positively in the stepped bore (8) of the end wall (9) delimiting the pressure medium chamber (4), into which end wall (9) the second connection (2) opens.

8. Hydraulic unit according to Claim 1, **characterized in that** the valve assembly comprises a substantially tubular valve housing (10) on the end portion of which oriented towards the second connection (2) a valve ball (12) received in a conical valve seat (11) is provided to form the non-return valve (7), and **in that** the elastic sealing element (6) is fixed to the end portion of the tubular valve housing (10) oriented away from the second connection (2).

9. Hydraulic unit according to Claim 8, **characterized in that** the elastic sealing element (6) is retained on the tubular valve housing (10) non-positively and/or positively, preferably by vulcanization of a rubber seal.

10. Hydraulic unit according to Claim 8, **characterized in that** the valve ball (12) is loaded in the direction of a valve seat (11) by means of a soft spring (13), for which purpose the spring (13) is supported in a cage (14) which is fixed by means of a crimped flange (15) along a collar (28) of the tubular valve housing (10).

11. Hydraulic unit according to Claim 8, **characterized in that** the sealing element (6) of the tubular valve housing (10) extends into a cup-shaped depression (16) provided in the crown of the piston (3), against which the sealing element (6) can be placed in order to isolate the second connection (2) from the pressure medium chamber (4) in a fluid-tight manner.

12. Hydraulic unit according to Claim 11, **characterized in that** the contour of the piston (3), together with the cup-shaped depression (16), is produced by deep-drawing from thin sheet metal.

## Revendications

1. Groupe hydraulique (17) pour une installation de frein de véhicule automobile, qui fonctionne selon le principe de refoulement, comprenant un raccord de cylindre principal (18) au niveau du groupe hydraulique (17) pour un capteur de pression de frein (19), comprenant des soupapes de régulation de pression réalisées sous forme de soupapes d'entrée et de sortie (22, 23) dans un circuit de frein prévu au moins en partie dans le groupe hydraulique (17), lequel circuit de frein peut être connecté par le biais de raccords de frein de roue (20) au niveau du groupe hydraulique (17) à au moins une paire de freins de roue (21), comprenant une conduite de retour raccordée en aval dans le groupe hydraulique (17) aux soupapes de sortie (23), laquelle, par le biais d'un premier raccord hydraulique (1), débouche dans une chambre de fluide sous pression (4) d'un accumulateur basse pression (26) délimitée par un piston (3) et laquelle, par le biais d'un deuxième raccord hydraulique (2), peut être connectée au niveau de la chambre de fluide sous pression (4) à la fois au côté d'aspiration d'une pompe (27) et, par le biais d'une soupape d'inversion (24) fermée dans la position de base, au raccord de cylindre principal (18) conduisant au capteur de pression de frein (19), et comprenant un clapet anti-retour (7) bloquant dans la direction de la chambre de fluide sous pression (4), lequel est inséré dans la région du deuxième raccord (2) dans la conduite de retour, la connexion hydraulique entre la chambre de fluide sous pression (4) et le deuxième raccord (2) étant coupée dans la position de base du piston (3), un élément d'étanchéité (6) étant prévu à cet effet entre le piston (3) et le deuxième raccord (2), lequel élément d'étanchéité, dans la position de base du piston (3), coupe la connexion hydraulique prévue fonctionnellement entre le deuxième raccord (2) et la chambre de fluide sous pression (4), **caractérisé en ce que** l'élément d'étanchéité (6) est réalisé sous forme élastique et est combiné avec le clapet anti-retour (7) bloquant dans la direction de la chambre de fluide sous pression (4) pour former un module de soupape pouvant être manipulé de manière autonome dans un alésage étagé (8) d'une paroi frontale (9) de l'accumulateur basse pression (26) délimitant la chambre de fluide sous pression (4).

2. Groupe hydraulique selon la revendication 1, **caractérisé en ce que** dans la position de base du piston (3), la chambre de fluide sous pression (4) est connectée hydrauliquement au premier raccord (1).

3. Groupe hydraulique selon la revendication 1 ou 2, **caractérisé en ce que** dans la position de base du piston (3), dans laquelle la chambre de fluide sous pression (4) est connectée hydrauliquement au premier raccord (1), la chambre de fluide sous pression (4) est toutefois séparée hydrauliquement du deuxième raccord (2) par le piston (3), le contenu volumique de la chambre de fluide sous pression (4) étant minimum.

4. Groupe hydraulique selon la revendication 3, **caractérisé en ce que** dans la position de base du piston (3), la chambre de fluide sous pression (4) est vidée.

5. Groupe hydraulique selon la revendication 4, **caractérisé en ce que** dans l'état vidé de la chambre de fluide sous pression (4), le piston (3) est positionné dans sa position de base fermant le deuxième raccord (2) sous l'action d'un ressort de piston (5).

6. Groupe hydraulique selon la revendication 5, **caractérisé en ce qu'**au début d'une opération de remplissage de la chambre de fluide sous pression (4) amorcée par le biais du premier raccord (1), le deuxième raccord (2) est libéré du piston (3), le piston (3) étant à cet effet éloigné du deuxième raccord (2) à l'encontre de l'action du ressort de piston (5) à la suite de la course du piston.

7. Groupe hydraulique selon la revendication 1, **caractérisé en ce que** le module de soupape est fixé par engagement par force dans l'alésage étagé (8) de la paroi frontale (9) délimitant la chambre de fluide sous pression (4), dans laquelle paroi frontale débouche le deuxième raccord (2).

8. Groupe hydraulique selon la revendication 1, **caractérisé en ce que** le module de soupape présente un boîtier de soupape (10) de forme essentiellement tubulaire, au niveau de la portion d'extrémité duquel, tournée vers le deuxième raccord (2), est prévue, pour réaliser le clapet anti-retour (7), une bille de soupape (12) reçue dans un siège de soupape de forme conique (11), et **en ce qu'**au niveau de la portion d'extrémité du boîtier de soupape (10) de forme tubulaire opposée au deuxième raccord (2) est fixé l'élément d'étanchéité élastique (6).

9. Groupe hydraulique selon la revendication 8, **caractérisé en ce que** l'élément d'étanchéité élastique (6) est retenu par engagement par force et/ou par correspondance de forme, de préférence par vulcanisation d'une garniture d'étanchéité en caoutchouc, sur le boîtier de soupape (10) de forme tubulaire.

10. Groupe hydraulique selon la revendication 8, **caractérisé en ce que** la bille de soupape (12) est sollicitée au moyen d'un ressort souple (13) dans la direction du siège de soupape (11), le ressort (13) s'appuyant à cet effet dans une cage (14) qui est fixée au moyen d'un bordage (15) le long d'un col (28) du boîtier de soupape (10) de forme tubulaire.

11. Groupe hydraulique selon la revendication 8, **caractérisé en ce que** le boîtier de soupape (10) de forme tubulaire s'étend avec l'élément d'étanchéité (6) dans un renfoncement (16) en forme de coque prévu dans le fond du piston (3), contre lequel l'élément d'étanchéité (6) peut s'appliquer de manière étanche aux liquides en vue de la séparation du deuxième raccord (2) de la chambre de fluide sous pression (4).

12. Groupe hydraulique selon la revendication 11, **caractérisé en ce que** le contour du piston (3), conjointement avec le renfoncement en forme de coque (16), est fabriqué par emboutissage profond de tôle mince.
